# EUROPÄISCHE PATENTSCHRIFT

(11) **EP 3 446 849 B1**
(45) Veröffentlichungstag und Bekanntmachung des Hinweises auf die Patenterteilung: **29.09.2021**
(21) Anmeldenummer: 17187425.8
(22) Anmeldetag: 23.08.2017
(51) Int. Cl.: B29C 45/14, B29C 45/26, B29C 45/37, A61J 1/06, A61J 1/14

(54) **VERFAHREN UND VORRICHTUNG ZUM HERSTELLEN EINES PRIMÄRPACKMITTELS MIT INTEGRIERTEM SEPTUM SOWIE PRIMÄRPACKMITTEL MIT INTEGRIERTEM SEPTUM**
METHOD AND DEVICE FOR PRODUCING A PRIMARY PACKAGE WITH INTEGRATED SEPTUM AND PRIMARY PACKAGING WITH INTEGRATED SEPTUM
PROCÉDÉ ET DISPOSITIF DE FABRICATION D'UN EMBALLAGE PRIMAIRE POURVU DE CONDUCTEUR MÉDIAN INTERNE INTÉGRÉ AINSI QU'UN EMBALLAGE PRIMAIRE POURVU DE CONDUCTEUR MÉDIAN INTERNE INTÉGRÉ

(43) Veröffentlichungstag der Anmeldung: 27.02.2019
(73) Patentinhaber: Gerresheimer Regensburg GmbH, 93047 Regensburg (DE)
(72) Erfinder: KREHER, Jessica, 92421 Schwandorf (DE)
(74) Vertreter: Hannke, Christian

(56) Entgegenhaltungen:
- WO-A2-2011/089193
- DE-A1-102013 113 399
- US-A9- 2016 121 526

## Beschreibung

Die Erfindung betrifft ein Verfahren und eine Vorrichtung zum Herstellen eines Primärpackmittels mit integriertem Septum nach dem Patentanspruch 1 beziehungsweise dem Patentanspruch 7 sowie ein Primärpackmittel mit integriertem Septum nach dem Patentanspruch 12.

In der pharmazeutischen Industrie werden flüssige Pharmazeutika oder dergleichen Flüssigkeiten häufig in Primärpackmitteln mit integriertem Septum steril abgefüllt, aus denen dann entsprechende Dosen, beispielsweise mittels Autoinjektoren oder Injektionspumpen, verabreicht werden können. Damit die Sterilität des Pharmazeutikums gewährleistet wird, weisen solche Primärpackmitteln in der Regel ein Septum auf, welches mittels einer Injektionsnadel durchstochen werden können. Somit ist es möglich, dass sterile Pharmazeutika aus dem Primärpackmitteln mittels der Injektionsnadel in eine Injektionsvorrichtung einzuziehen beziehungsweise einem Patienten zu verabreichen. Sobald die erforderliche Menge beziehungsweise Dosis entnommen, wird die Injektionsnadel wieder aus dem Septum herausgezogen. Das Septum verschließt dabei das Primärpackmitteln mit dem darin aufbewahrten sterilen Pharmazeutikum wiederum in steriler Art und Weise. Dazu weist das Septum in sich eine gewisse Kompression auf, die dazu beiträgt, dass das sterile Pharmazeutikum in dem Primärpackmitteln gegenüber der Umwelt seine Sterilität aufrechterhalten kann.

Derzeit sind im Wesentlichen derartige Primärpackmittel aus Glas bekannt, die allerdings relativ bruchanfällig sind. Zudem führen die mit der Glasfertigung einhergehenden hohen Toleranzen nicht nur zu höheren Produktionskosten in Folge von entsprechendem Ausschussmaterial, sondern auch zu zusätzlichen Herausforderungen bei der Konzeptentwicklung von kompatiblen Geräten, in die diese Primärpackmittel eingesetzt beziehungsweise integriert werden sollen. Derartige kompatible Geräte sind beispielsweise Autoinjektoren und auch Infusionspumpen.

Bei derartigen Primärpackmittel aus Glas wird zudem das Septum in einem zusätzlichen Arbeits- beziehungsweise Montageschritt an dem Primärpackmittel angebracht und somit die kleinere Öffnung des Primärpackmittels verschlossen. Dabei wird das Septum mittels einer gecrimpten Fassung aus beispielsweise Aluminium über diese kleine obere Öffnung des Primärpackmittels montiert.

Zwar sind auch individuelle Primärpackmittel aus Kunststoff bekannt, wobei diese allerdings nicht kompatibel mit Standardabfüllanlagen sind. Die Kosten für die Planung und Entstehung von individuellen Abfüllanlagen können dabei ein Vielfaches der Kosten für eine StandardMultifill-Anlage betragen und dabei durchaus zweistellige Millionenhöhen in Euro erreichen. Ebenfalls gestalten sich die Lieferzeiten für derartige individuelle Anlagen deutlich länger als für Standardabfüllanlagen.

Bei der Herstellung von derartigen Primärpackmitteln mit integriertem Septum muss das Septum außerdem eine gewisse Vorspannung beziehungsweise Kompression im Primärpackmittel aufweisen, um die erforderliche Dichtigkeit zu gewährleisten und die Gefahr beim An-/Durchstechen des Septums Partikel auszustechen, die dann in den Flusspfad gelangen, zu minimieren.

Primärpackmittel mit integriertem Septum, welche als Glaskartuschen ausgebildet sind, müssen wegen ihrer Bruchanfälligkeit bisher in Autoinjektoren, wie beispielsweise Insulinpens oder dergleichen, immer so im Gerät montiert und positioniert werden, dass sie gegen eine Einwirkung von außen ausreichend geschützt sind, wenn das Gerät beispielsweise unbeabsichtigt fallen gelassen wird und dabei auf den Boden aufprallt.

Es ist zwar möglich, Primärpackmittel aus Glas durch chemische Prozesse zu härten, um eine höhere Bruchsicherheit zu erzielen. Allerdings sind diese Härtungsprozesse störanfällig und technisch aufwendig zu realisieren, wobei immer noch ein mittleres Restrisiko für einen Bruch des Primärpackmittels bestehen bleibt.

Die mit der Glasfertigung einhergehenden hohen Toleranzen beziehungsweise die Schwankungen innerhalb der Maße bei der Herstellung der Primärpackmittel aus Glas verursachen nicht nur höhere Produktionskosten, beispielsweise durch das "Hinsortieren" dimensional akzeptabler Primärpackmittel, sondern auch Herausforderungen bei der Konzeptentwicklung von kompatiblen Geräten, in welche diese später eingesetzt werden sollen. Die Gewährleistung einer robusten Schnittstellenkompatibilität zu den meist aus Kunststoff gefertigten (Auto-) Injektoren oder Pumpen und den damit einhergehenden geringeren Toleranzen, verursacht zusätzlichen Entwicklungsbedarf und auch damit verbundene höhere Produktions- und Entwicklungskosten.

Aus dem Dokument DE 10 2013 113 399 A1 ist ein Verfahren zum Herstellen eines Spritzgussteils mit integriertem Septum bekannt. Dabei werden zwei Ausführungsformen des Verfahrens dargestellt. In einer ersten Ausführungsform wird das Septum mittels eines Stiftes in einem Spritzgusswerkzeug positioniert. Anschließend wird das Septum umspritzt. Nach einer zweiten Ausführungsform wird das Spritzgussteil in einem Spritzgusswerkzeug hergestellt. Das Septum wird dann mittels eines Stempels in das noch nicht abgekühlte Spritzgussteil gedrückt. Durch den Schrumpfprozess während der Abkühlphase wird das Septum überwiegend in radialer Richtung komprimiert, wodurch die Re-Sealing Eigenschaften des Septums optimiert werden.

Es ist daher Aufgabe der Erfindung, ein Verfahren und eine Vorrichtung zum Herstellen eines Primärpackmittels mit integriertem Septum sowie ein derartiges Primärpackmittel bereit zu stellen, wobei dieses Primärpackmittel bruchsicher ist und verfahrenstechnisch einfach mit geringer Toleranzbreite herstellbar ist und zudem in den gängigen Standardabfüllanlagen einsetzbar ist.

Gelöst wird diese Aufgabe durch ein Verfahren mit allen Merkmalen des Patentanspruchs 1, eine Vorrichtung mit allen Merkmalen des Patentanspruchs 7 und einem Primärpackmittel mit allen Merkmalen des Patentanspruchs 12. Vorteilhafte Ausgestaltungen der Erfindung finden sich in den Unteransprüchen.

Das erfindungsgemäße Verfahren zum Herstellen eines Primärpackmittels mit integriertem Septum zeichnet sich dabei durch folgende Verfahrensschritte aus:
a) Bereitstellen eines Septums,
b) Bereitstellen eines Spritzgusswerkzeuges mit zwei relativ gegeneinander verfahrbaren Werkzeughälften, wobei einerseits beide Werkzeughälften verfahrbar sowie andererseits eine Werkzeughälfte feststehend und die andere Werkzeughälfte verfahrbar ausgebildet sein können,
c) Positionieren des Septums in dem Spritzgusswerkzeug,
d) Verfahren der beiden Werkzeughälften des Spritzgusswerkzeuges derart, dass eine der Geometrie des herzustellenden Primärpackmittels entsprechende Kavität entsteht,
e) Einspritzen eines Werkstoffes in die Kavität des Spritzgusswerkzeugs über eine Einspritzöffnung in einer der Werkzeughälften des Spritzgusswerkzeugs, wobei das Septum (zwischen den beiden Werkzeughälften des Spritzgusswerkzeugs von diesen auf Vorspannung gehalten und ein Rand des Septums von dem Werkstoff umspritzt wird, wobei ein Bereich des Septums, der von beiden Werkzeughälften kontaktiert wird, frei von Werkstoff bleibt.
f) Abkühlen des eingespritzten Werkstoffs unter Aufrechterhaltung eines Nachdrucks, wodurch sich das herzustellende Primärpackmittel mit integriertem Septum ausbildet,
g) Verfahren der beiden Werkzeughälften des Spritzgusswerkzeugs derart, dass das hergestellte Primärpackmittel mit integriertem Septum aus dem Spritzgusswerkzeug entnommen werden kann und
h) Entnahme des hergestellten Primärpackmittels mit integriertem Septum aus dem Spritzgusswerkzeug.

Durch das erfindungsgemäße Verfahren können nunmehr mittels Spritzgussverfahren Primärpackmittel mit integriertem Septum hergestellt werden, welche aus Kunststoff bestehen und damit eine sehr viel höhere Bruchsicherheit aufweisen als jegliches Primärpackmittel aus Glas. Zudem ist bei einem derartigen Spritzgussverfahren gewährleistet, dass die Fertigung des Primärpackmittels mit integriertem Septum mit geringen Toleranzen erfolgen kann und somit eine höhere Schnittstellenkompatibilität zu den in der Regel aus Kunststoff gefertigten kompatiblen Geräten, in welche sie eingesetzt werden sollen, wie beispielsweise (Auto-) Injektoren oder Injektionspumpen oder dergleichen, erzielt werden kann. Durch die Herstellung des Primärpackmittels mit deutlich geringeren Toleranzen wird auch ein geringerer Ausschuss sowie eine größere Designfreiheit bei der Gestaltung des Primärpackmittels erreicht. Hierdurch werden nicht nur die Produktionskosten gering gehalten, vielmehr wird auch deutlich weniger Material zur Herstellung benötigt, da deutlich weniger Ausschuss beziehungsweise gar kein Ausschuss infolge der geringen Toleranz erzeugt wird.

Im Rahmen der Erfindung kann zur Herstellung des Primärpackmittels ein im Montagespritzguss hergestelltes Septum verwendet werden. Hierbei soll unter Septum jedwedes mögliche elastomere Insert verstanden werden, sodass auch Septi aus einem Elastomer verwendet werden können. Vor dem Anbringen des Septums an dem Primärpackmittel ist es erfindungsgemäß nicht mehr nötig, das Septum zu mit einer gecrimpten Fassung zu versehen. Vielmehr wird das Septum während des Spritzvorgangs ohne separate Fassung in dem Primärpackmittel mit der nötigen Vorspannung fixiert.

Die Kompression des Septums bei der Herstellung des Primärpackmittels wird dabei zwischen den beiden bewegten Werkzeughälften erzeugt, wodurch nicht nur eine ausreichende Dichtigkeit sowohl während des Spritzgussprozesses als auch später für das fertige Primärpackmittel hergestellt wird, sondern vermindert gleichzeitig die Gefahr eines Verzuges des Septums während des Einspritzens des Werkstoffes beziehungsweise der Schmelze.

Nach einer ersten vorteilhaften Ausgestaltung der Erfindung wird dabei als Werkstoff ein Kunststoff, wie beispielsweise ein Cycloolefin-Polymer, ein Cycloolefin-Copolymer oder dergleichen verwendet. Derartige Kunststoffe sind in der Medizintechnik ausreichend erprobt und gewähren daher die für die Aufbewahrung von Pharmazeutika notwendigen Produkteigenschaften und -sicherheit.

Dabei hat es sich nach einem weiteren Gedanken der Erfindung als vorteilhaft erwiesen, dass das Septum vor dem Einspritzen des Werkstoffs in einer Aufnahme einer als Patrize ausgebildeten Werkzeughälfte positioniert wird. Hierdurch ist möglich, das Septum auf die Aufnahme der Patrize aufzustecken und die Kompression des Septums zwischen den beiden Werkzeughälften zu gewährleisten. Hierdurch wird bereits die oben erwähnte Dichtigkeit sowohl während des Herstellungsprozesses als auch später für das fertige Primärpackmittel gewährleistet.

Alternativ ist es natürlich auch möglich, dass das Septum vor dem Einspritzen des Werkstoffes in einer Aufnahme einer als Matrize ausgebildeten Werkzeughälfte positioniert wird. Auch bei dieser Vorgehensweise wird die notwendige Dichtigkeit des Septums sowohl während der Herstellung des Primärpackmittels als auch später für das fertige Primärpackmittel gewährleistet.

Als vorteilhaft hat es sich weiterhin auch erwiesen, dass während des Einspritzens des Werkstoffs ein umlaufender Rand des Septums umspritzt wird. Hierdurch wird sichergestellt, dass das Septum auf dem fertigen Primärpackmittel anbringbar ist und dort unverlierbar an dem Primärpackmittel fixiert ist. Nach dem das hergestellte Primärpackmittel mit integriertem Septum aus dem Spritzgusswerkzeug entnommen wurde, kann dies direkt der weiteren Verwendung zugeführt werden. Hierbei können hergestellte Primärpackmittel mit integriertem Septum umgehend in eine entsprechende Vorrichtung eingesetzt werden, sodass im Anschluss eine direkte Sterilisation möglich ist. Ein zusätzlicher Waschvorgang oder Reinigungsprozess ist dann für die hergestellten Primärpackmittel nicht mehr nötig.

Vorteilhaft hierbei ist zudem, dass die Fertigung der Primärpackmittel in einer für Standardabfüllanlagen kompatiblen Geometrie erfolgt, die sich dabei an den bisherigen Glaskartuschen orientiert. Nachfolgend werden die Primärpackmittel mit dem entsprechenden Pharmazeutikum befüllt und weisen durch die der Geometrie der Glaskartuschen aus dem Stand der Technik entsprechenden Geometrie gleiche Flusseigenschaften für das darin abgefüllte Pharmazeutikum wie die üblichen Glaskartuschen.

In vorteilhafterweise Art und Weise wird nach dem Einspritzen des Werkstoffs in die Kavität ein Nachdruck beziehungsweise der Spritzdruck wenigstens solange aufrechterhalten, bis der Werkstoff des Primärpackmittels seine Erstarrungstemperatur unterschritten hat, sodass sich das Septum nicht mehr aus dem Primärpackmittel herauslösen beziehungsweise seine Position darin nicht mehr verändern kann.

Die erfindungsgemäße Vorrichtung zum Herstellen eines Primärpackmittels mit integriertem Septum ist dabei als Spritzgusswerkzeug mit zwei gegeneinander verfahrbaren Werkzeughälften ausgebildet, wobei einerseits beide Werkzeughälften verfahrbar sowie andererseits eine Werkzeughälfte feststehend und die andere Werkzeughälfte verfahrbar ausgebildet sein können. In vorteilhafter Weise ist dabei die eine Werkzeughälfte als Patrize ausgebildet, welche in die andere als Matrize ausgebildete Werkzeughälfte einführbar ist. Dabei weist eine Werkzeughälfte eine Aufnahme für das Septum und die andere Werkzeughälfte einen Stempel auf. Der Stempel und die Aufnahme werden während des Einspritzens des Werkstoffs über eine Einspritzöffnung gegeneinander gedrückt, sodass dabei das Septum während des Umspritzens in einem eingepressten vorgespannten Zustand in der erfindungsgemäßen Vorrichtung vorliegt. In dem Bereich, in dem der Stempel und die Aufnahme der beiden Werkzeughälften gegeneinander drücken, wird dabei beim Einspritzen des Werkstoffs dort kein Werkstoff eingebracht, sodass dieser Bereich werkstofffrei bleibt und später zur Entnahme des in dem Primärpackmittel aufgenommenen Pharmazeutikums dient.

Damit das Septum innerhalb des herzustellenden Primärpackmittels sicher und unverlierbar angeordnet ist, ist es vorgesehen, dass in der als Matrize ausgebildeten Werkzeughälfte benachbart zum Stempel ein umlaufender Kanal vorgesehen ist. Hierdurch ist es ermöglicht, dass das Septum auch von seiner Frontseite her mit Werkstoff umspritzt wird und nur der Bereich des Septums, in welchem der Stempel und die Aufnahme aneinanderdrücken, werkstofffrei bleibt. In diesem Bereich kann das Septum später mit einer Injektionsnadel durchstochen werden, sodass aus einem Aufnahmebereich des hergestellten Primärpackmittels ein dort aufgenommenes Pharmazeutikum entnommen werden kann.

Sofern das herzustellende Primärpackmittel an seinem Entnahmebereich, in welchem das Septum angeordnet ist mit einer Schulter beziehungsweise mit einem Gewinde oder dergleichen versehen werden soll, ist es vorgesehen, dass die als Matrize ausgebildeten Werkzeughälfte eine Basis und zwei darauf im Wesentlichen senkrecht stehenden Schenkel aufweist, wobei die Innenkontur der beiden Schenkel der Außenkontur des herzustellenden Primärpackmittels entspricht und die Schenkel nach radial außen von der Basis weg verfahrbar sind. Durch diese Maßnahme ist es möglich, Primärpackmittel mit dem erfindungsgemäßen Verfahren herzustellen, welche auf ihrer Außenkontur Schultern, Gewinde oder dergleichen aufweisen. Nach dem Einspritzen und Aushärten des Werkstoffs in die Kavität werden daher zuerst die beiden Schenkel der als Matrize ausgebildeten Werkzeughälften gegen deren Basis radial nach außen verfahren, sodass die Außenkontur des hergestellten Primärpackmittels frei liegt und die als Patrize ausgebildete Werkzeughälfte mit samt dem hergestellten Primärpackmittel aus der Matrize herausgezogen werden kann, um dann das Primärpackmittel von der Patrize mit einer entsprechenden Entnahmevorrichtung zu entnehmen. Alternativ ist es natürlich auch möglich, die als Matrize ausgebildete Werkzeughälfte von der Patrize weg zu verfahren und dann mit der Entnahmeeinrichtung das Primärpackmittel von der als Patrize ausgebildeten anderen Werkzeughälfte zu entnehmen und seiner weiteren Verwendung zuzuführen.

Nach einem weiteren Gedanken der Erfindung ist vorgesehen, dass die Außenkontur der als Patrize ausgebildeten Werkzeughälfte der Innenkontur des herzustellenden Primärpackmittels entspricht.

Das erfindungsgemäße Primärpackmittel besteht in vorteilhafter Weise aus einem Kunststoff, in welchem das Septum in einem Entnahmebereich aufgenommen ist, wobei das Septum einen Aufnahmebereich für ein Pharmazeutikum des Primärpackmittels von dessen Außenraum trennt.

Um dabei ein Primärpackmittel aus Kunststoff zu realisieren, das in seiner Geometrie denen aus Glas entspricht und an die die Verbraucher gewöhnt sind und somit keine Akzeptanzprobleme aufgrund eines abgeänderten Designs bei den Kunden auftreten, ist es vorgesehen, dass der Entnahmebereich eine zum Aufnahmeraum hinweisende Schulter aufweist.

In die gleiche Richtung zielt die Ausgestaltung der Erfindung, dass das Primärpackmittel an den zum Entnahmebereich hinweisenden Enden des Aufnahmeraums für ein Pharmazeutikum mit einer umlaufenden Schräge versehen ist. Hierdurch verjüngt sich das Primärpackmittel entsprechend den üblichen Primärpackmitteln aus Glas zum Entnahmebereich hin, sodass auch hierdurch keine Akzeptanzprobleme innerhalb des Kunden- beziehungsweise Verbraucherstamms auftreten sollten.

Damit das Septum während der Herstellung des Primärpackmittels in einfacher Weise in das zu verwendende Werkzeug eingeführt werden kann, ist es vorgesehen, dass das Septum eine Basis sowie einen darauf im Wesentlichen senkrecht stehenden umlaufenden Wandbereich aufweist. Mit diesem Wandbereich kann das Septum in einfacher Weise auf einen entsprechenden Stempel einer Werkzeughälfte des Werkzeugs montiert werden.

Damit diese Montage auf dem Stempel in einfacher Weise ohne größere Probleme erfolgen kann, ist es vorgesehen, dass der umlaufende Wandbereich des Septums an seinem freien Ende eine nach innen weisende Schräge aufweist. Diese Schräge dient bei der Montage des Septums auf dem Stempel als Einführschräge.

In einer besonderen Ausgestaltung der Erfindung kann diese Schräge bis zur Außenwand des umlaufenden Wandbereichs geführt sein. Diese Ausgestaltung des erfindungsgemäßen Primärpackmittels dient dazu, dass bei der Herstellung des Primärpackmittels Wanddicken am Hals beziehungsweise dem Entnahmebereich des Primärpackmittels vermieden werden, sodass die Flusseigenschaften der in dem Primärpackmittel aufgenommen Flüssigkeiten gegenüber den herkömmlichen Glaskartuschen im Wesentlichen unverändert bleiben.

Damit bei der Herstellung des erfindungsgemäßen Primärpackmittels die Septi in einfacher Weise vereinzelt werden können, ist vorgesehen, dass das Septum an seiner Basis mit Abstandshaltern versehen ist. Dadurch ist gewährleistet, dass beim Zuführen der Septen an die erfindungsgemäße Vorrichtung zum Herstellen des Primärpackmittels mit einem erfindungsgemäßen Herstellungsverfahren die Septen in einfacher Weise und sicher vereinzelt und somit sicher auf dem jeweiligen Stempel der entsprechenden Werkzeughälfte aufgesteckt werden können.

Damit das Septum einen deutlich verbesserten Halt auf dem Primärpackmittel aufweist, ist es vorgesehen, dass das Septum an seiner Basis mit einem umlaufenden, vorzugsweise abgeschrägten Vorsprung versehen ist. Hierdurch wird gewährleistet, dass während der Herstellung des Primärpackmittels das Septum in diesem Bereich eine Art Hinterspritzung des Vorsprungs erfährt, sodass das Septum besser und sicherer auf dem Primärpackmittel fixiert ist. In vorteilhafter Weise wird dadurch zudem erreicht, dass die Spannung beziehungsweise Kompression oder Verpressung des Septums bei dem fertig hergestellten Primärpackmittel besser erhalten wird.

Weiterhin ist es vorteilhaft, dass an dem gegenüberliegenden Ende des Primärpackmittels eine Öffnung vorgesehen ist, über welche ein Pharmazeutikum bei der weiteren Verarbeitung des Primärpackmittels in dieses eingebracht werden kann.

Dabei ist in vorteilhafter Weise an der dem Septum gegenüberliegend angeordneten Öffnung ein Flansch vorgesehen. Die zusätzliche Flanschgeometrie eröffnet zusätzliche, alternative Montagemöglichkeiten des Primärpackmittels im Gerät, eine höhere Schnittstellen-Kompatibilität sowie größere Design-Freiheitsgrade für das Verabreichungsgerät ohne die Kompatibilität zu den bestehenden Standard-Abfüllanlagen zu verringern.

Die innere Geometrie der erfindungsgemäßen Primärpackmittel entspricht den von Standard-Glaskartuschen, damit die Flowraten für die Flüssigkeitsentnahme oder -ausgabe, mit denen bisheriger Glaskartuschen vergleichbar und im Wesentlichen unverändert sind. Auch dieses ist für die Marktakzeptanz des Produktes sehr wichtig.

Weitere Ziele, Vorteile, Merkmale und Anwendungsmöglichkeiten der vorliegenden Erfindung ergeben sich aus der nachfolgenden Beschreibung von Ausführungsbeispielen anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figuren 1a bis 1f:: ein erstes Ausführungsbeispiel eines erfindungsgemäßen Verfahrens zur Herstellung eines erfindungsgemäßen Primärpackmittels in einem ersten Ausführungsbeispiel einer erfindungsgemäßen Vorrichtung in verschiedenen Verfahrensschritten,
- Figuren 2a bis 2e:: ein zweites Ausführungsbeispiel eines erfindungsgemäßen Verfahrens zur Herstellung eines erfindungsgemäßen Primärpackmittels in einem zweiten Ausführungsbeispiel einer erfindungsgemäßen Vorrichtung in verschiedenen Verfahrensschritten,
- Figuren 3a bis 3f:: ein drittes Ausführungsbeispiel eines erfindungsgemäßen Verfahrens zur Herstellung eines erfindungsgemäßen Primärpackmittels in einem dritten Ausführungsbeispiel einer erfindungsgemäßen Vorrichtung in verschiedenen Verfahrensschritten,
- Figur 4:: ein erstes Ausführungsbeispiel eines erfindungsgemäßen Primärpackmittels,
- Figur 5:: ein zweites Ausführungsbeispiel eines erfindungsgemäßen Primärpackmittels,
- Figur 6: ein drittes Ausführungsbeispiel eines erfindungsgemäßen Primärpackmittels und
- Figuren 7a bis 7c:: Detaildarstellungen während der Herstellung des Primärpackmittels der Figur 6.

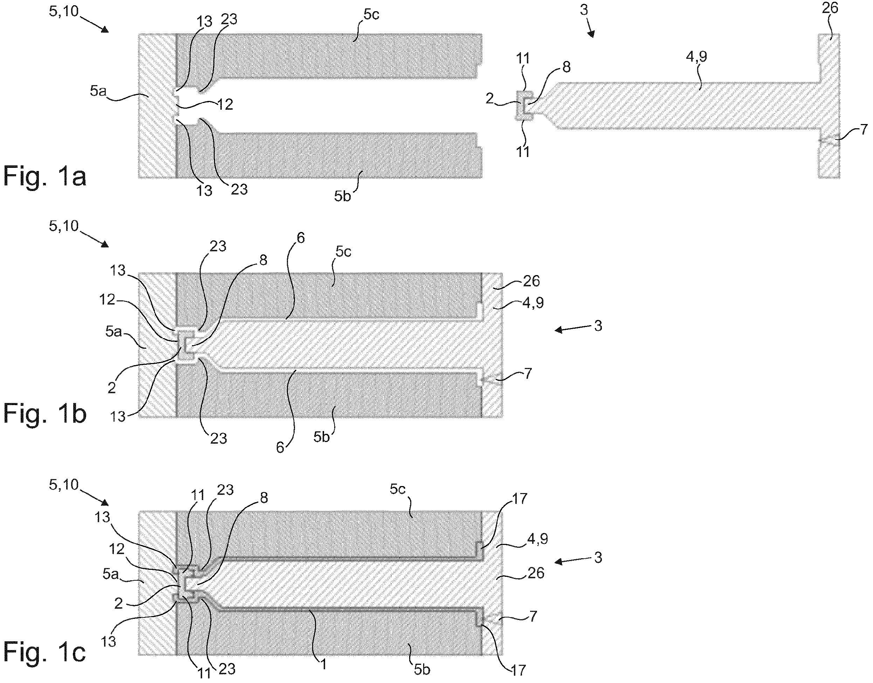

In den Figuren 1a bis 1f ist ein erstes Ausführungsbeispiel eines erfindungsgemäßen Verfahrens zur Herstellung eines erfindungsgemäßen Primärpackmittels 1 in einem ersten Ausführungsbeispiel einer erfindungsgemäßen Vorrichtung in verschiedenen Verfahrensschritten dargestellt.

Die Figur 1a zeigt dabei zwei Werkzeughälften 4, 5 eines Spritzgusswerkzeuges 3, wobei die eine Werkzeughälfte 4 als Patrize 9 und die andere Werkzeughälfte 5 als Matrize 10 ausgebildet ist. Die als Patrize 9 ausgebildete Werkzeughälfte 4 ist dabei an ihrem der anderen Werkzeughälfte 5 zugewandten Ende verjüngend beziehungsweise abgeschrägt ausgebildet und weist dort eine Aufnahme 8 für ein Septum 2 auf. In der Darstellung gemäß der Figur 1a ist bereits ein Septum 2 auf diese Aufnahme 8 aufgesetzt. Das dortige Septum 2 weist dabei einen umlaufenden Rand 11 auf, sodass die Aufnahme 8 von dem umlaufenden Rand 11 des Septums 2 vollständig umgriffen wird. An dem der Aufnahme 8 gegenüberliegenden Ende ist die als Patrize 9 ausgebildete Werkzeughälfte mit einem Deckel 26 versehen, welcher eine Einspritzöffnung aufweist, durch welchen später ein Kunststoff in das Spritzgusswerkzeug 3 eingespritzt werden kann.

Die andere Werkzeughälfte 5, die als Matrize 10 ausgebildet ist, besteht dabei aus einer Basis 5a und darauf im Wesentlichen senkrecht zur Basis 5a angeordneten Schenkel 5b und 5c. Die Schenkel 5b und 5c sind gegenüber der Basis 5a radial nach außen verführbar. An der Basis 5a ist nach innen, zu der anderen als Patrize 9 ausgebildeten Werkzeughälfte 4 hin gerichtet, ein Stempel 12 vorgesehen, welcher von einem umlaufenden Kanal 13 umgeben ist. Die Schenkel 5a und 5b weisen an ihrem zur Basis 5a hinweisenden Ende eine Hinterschneidung 23 auf, welche den Innenbereich der beiden Schenkel 5b und 5c vollständig umlaufen. Durch diese Hinterschneidung 23 ist es möglich, Primärpackmittel herzustellen, deren Außenkontur der der üblichen Glaskartuschen entspricht, sodass die Verbraucher sich nicht an ein anderes Design gewöhnen müssen. Durch diese Hinterschneidung 23 ist es allerdings notwendig, dass diese Schenkel 5b und 5c radial nach außen gegenüber der Basis 6a verfahrbar sein müssen, damit das durch die erfindungsgemäße Vorrichtung hergestellte Primärpackmittel 1 aus dem Spritzgusswerkzeug 3 entnommen werden kann.

In der Figur 1b ist nunmehr die als Patrize 9 ausgebildete Werkzeughälfte 4 in die als Matrize 10 ausgebildete Werkzeughälfte 5 unter Bildung einer Kavität 6 eingeschoben, wobei der Deckel 26 der Patrize 9 diese Kavität gegenüber der Umwelt abschließt. Über die Einspritzöffnung 7 ist es nun möglich einen Werkstoff in die Kavität 6 einzuspritzen. Wie zudem aus der Darstellung der Figur 1b ersichtlich ist, drückt nun der Stempel 12 der Basis 5a gegen das Septum, sodass dieses fest gegen die Aufnahme 8 der als Patrize 9 ausgebildeten Werkzeughälfte 4 angedrückt ist. Hierbei ist zu erkennen, dass der umlaufende Rand 13 innerhalb der Basis 5a teilweise von dem Septum 2 überdeckt ist. Hierdurch ist es möglich, dass ein Hinterspritzen des Septums 2 in diesem Bereich erfolgen kann.

In der Figur 1c ist nun dargestellt, wie sich das Primärpackmittel 1 nach dem Einspritzen des Werkstoffes über die Einspritzöffnung 7 in dem Spritzgusswerkzeug 3 ausbildet. Deutlich zu erkennen ist hierbei, dass durch die Hinterschneidung 23 die beiden Werkzeughälften 4 und 5 nicht mehr einfach gegeneinander zu verfahren sind, um das Primärpackmittel 1 aus dem Spritzgusswerkzeug 3 zu entnehmen. Deutlich zu erkennen ist auch, dass der umlaufende Rand 13 der Basis 5a auch mit Werkstoff gefüllt ist und das Septum 2 damit hinterspritzt ist. Nachdem der Werkstoff in die Kavität 6 eingespritzt wurde und sich das Primärpackmittel 1 innerhalb dieser Kavität 6 ausbildet, wird ein Nachdruck beziehungsweise der Spritzguss während einer Abkühlphase aufrechterhalten, bis der Werkstoff des Primärpackmittels 1 seiner Erstarrungstemperatur unterschritten hat, sodass sich das Septum 2 nicht mehr aus dem Primärpackmittel 1 herauslösen beziehungsweise seine Position darin nicht mehr verändern kann.

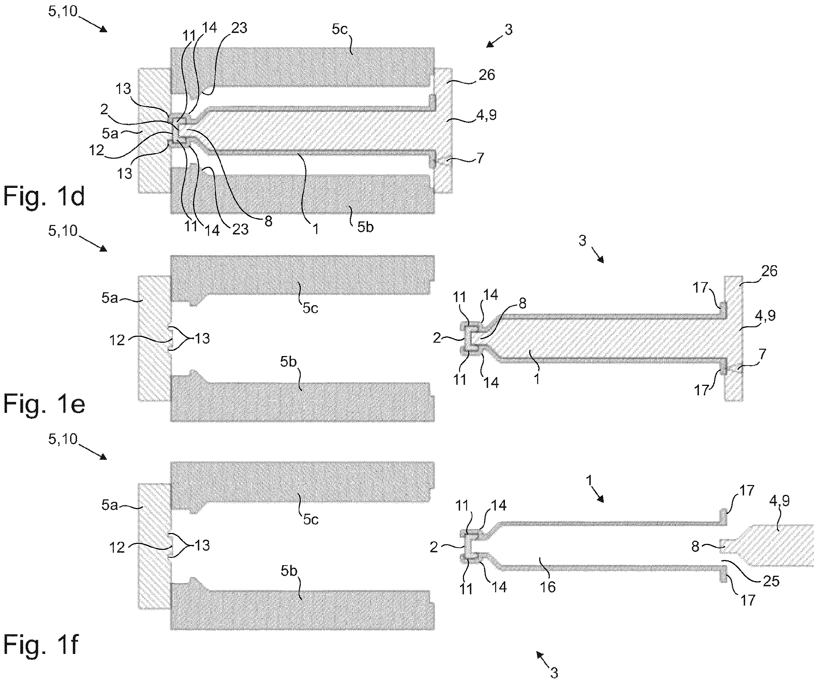

Um nun das hergestellte Primärpackmittel 1 aus dem Spritzgusswerkzeug 3 zu entnehmen, werden - wie in der Figur 1d dargestellt - nunmehr die beiden Schenkel 5b und 5c der als Matrize 10 ausgebildeten Werkzeughälfte 5 gegenüber der Basis 5a radial nach außen verfahren. Hierdurch geben die Hinterschneidungen 23 eine Schulter 14 des Primärpackmittels 1 frei, sodass die beiden Werkzeughälften 4 und 5 nun derart gegeneinander verfahren werden, dass die als Patrize 9 ausgebildete Werkzeughälfte 4 nicht mehr in der als Matrize 10 aufgenommenen Werkzeughälfte 5 aufgenommen ist, so wie dies in Figur 1e dargestellt ist.

In der Figur 1f wird nunmehr gezeigt, wie das hergestellte erfindungsgemäße Primärpackmittel 1 nunmehr von der als Patrize 9 ausgebildeten Werkzeughälfte 4 entnommen wird und dann einer weiteren Verarbeitung zugeführt werden kann.

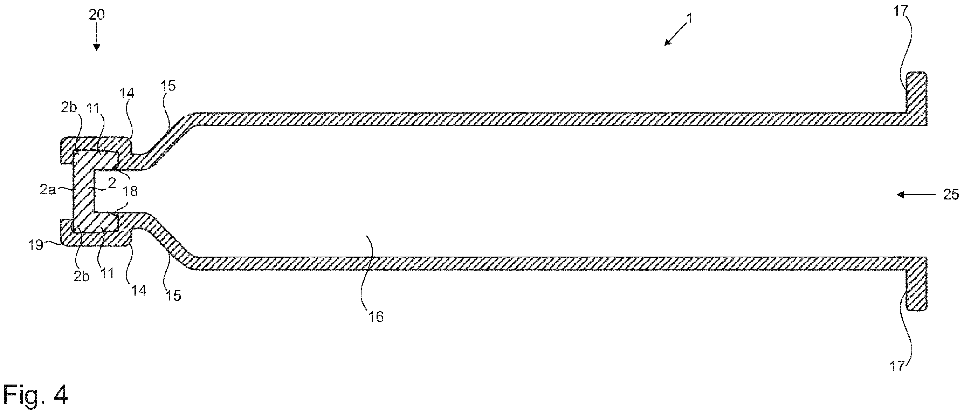

Die Figur 4 zeigt nunmehr ein nach dem Verfahren gemäß der Figuren 1a bis 1f in der dortigen Vorrichtung hergestelltes Primärpackmittel 1. Deutlich zu erkennen sind hierbei die gegenüberliegenden Enden des Primärpackmittels 1. An dem einen Ende ist dabei eine Öffnung 25 zum Einbringen eines Pharmazeutikums in einem Aufnahmebereich 16 des Primärpackmittels 1 vorgesehen. An den Enden mit der Öffnung 25 ist zudem ein umlaufender Flansch 17 angeordnet, der ein weiteres Handling des Primärpackmittels 1 bei der weiteren Verarbeitung erleichtert. An dem anderen Ende des Primärpackmittels 1 ist ein Entnahmebereich 20 für die Entnahme eines in den Aufnahmeraum 16 eingebrachten Pharmazeutikums angeordnet. Dieser Entnahmebereich 20 enthält dabei ein Septum 2, welches vorliegend mit einem umlaufenden Rand 11 versehen ist. Das Septum 2 besteht somit aus einer Basis 2a und einem auf der Basis 2a in deren Außenbereich senkrecht stehenden und die Basis 2a umlaufenden Wandbereich 2b, der den umlaufenden Rand 11 bildet. Das Septum 2 weist dabei auf seiner Basis 2a Abstandshalter 19 auf, die bei der Herstellung des Primärpackmittels 1 dazu dienen, dass die Septi in einfacher Weise vereinzelt werden können. Der umlaufende Rand 11 des Septums 2 ist an seinem zum Aufnahmeraum 16 hinweisenden Randbereich mit einer Schräge 18 ausgebildet. Diese Schräge dient in erster Linie dazu, das Septum 2 bei der Herstellung besser auf die dortige Aufnahme 8 für das Septum aufstecken zu können. Im Bereich dieser Schrägen 18 ist das Septum 2 nunmehr hinterspritzt, sodass dadurch auch ein sicherer Halt des Septums in dem Primärpackmittel 1 gewährleistet ist.

Andererseits ist das Septum 2 auch noch an seiner Basis 2a auf deren vom Aufnahmeraum 16 weg weisendem Bereich umspritzt, sodass auch dadurch ein sicherer Halt des Septums 2 in dem Primärpackmittel 1 gewährleistet ist. Weiterhin ist das Primärpackmittel 1 in seinem Entnahmebereich 20 verjüngend ausgebildet und daher mit einer Schräge 15 versehen. Ferner weist der Aufnahmebereich 20 eine umlaufende Schulter 14 auf. Durch diese Ausgestaltung mit den Schrägen 15 und der Schulter 14 weist das Primärpackmittel 1 im Wesentlichen eine identische Geometrie zu den herkömmlichen Glaskartuschen auf, sodass eine höhere Marktakzeptanz bei Pharmakunden gewährleistet ist. Zudem wird durch die gleiche Innengeometrie des Primärpackmittels 1 erreicht, dass das Flowverhalten für die Flüssigkeit beziehungsweise das Pharmazeutikum innerhalb des Aufnahmeraums 16 im Wesentlichen identisch ist zu dem Flowverhalten bei den herkömmlichen Glaskartuschen.

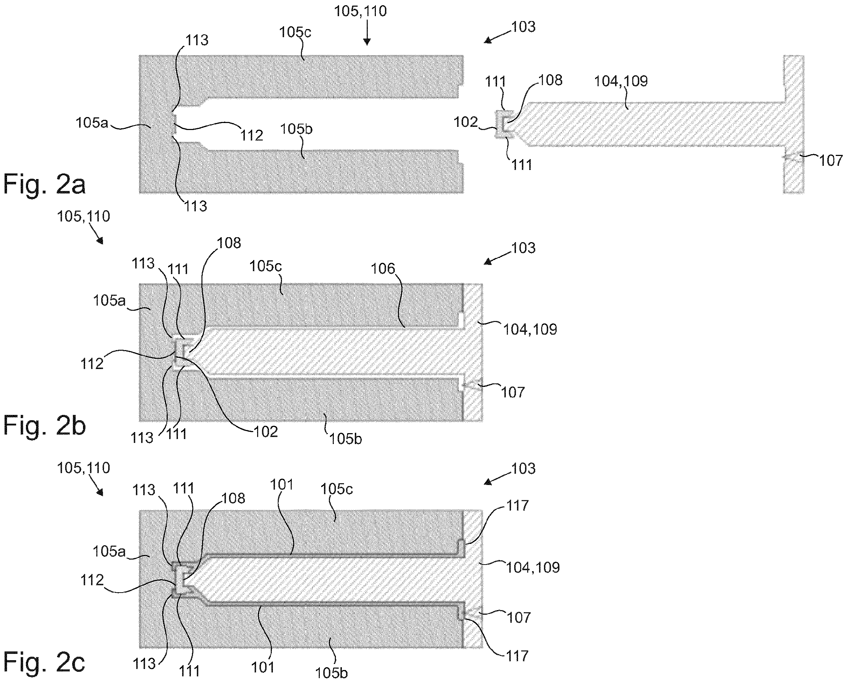

In den Figuren 2a bis 2e ist ein zweites Ausführungsbeispiel eines erfindungsgemäßen Verfahrens zur Herstellung eines erfindungsgemäßen Primärpackmittels 101 in einem zweiten Ausführungsbeispiel einer erfindungsgemäßen Vorrichtung in verschiedenen Verfahrensschritten dargestellt.

Die Figur 2a zeigt dabei zwei Werkzeughälften 104, 1055 eines Spritzgusswerkzeuges 103, wobei die eine Werkzeughälfte 104 als Patrize 109 und die andere Werkzeughälfte 105 als Matrize 110 ausgebildet ist. Die als Patrize 109 ausgebildete Werkzeughälfte 104 ist dabei an ihrem der anderen Werkzeughälfte 105 zugewandten Ende verjüngend beziehungsweise abgeschrägt ausgebildet und weist dort eine Aufnahme 108 für ein Septum 102 auf. In der Darstellung gemäß der Figur 2a ist bereits ein Septum 102 auf diese Aufnahme 108 aufgesetzt. Das dortige Septum 102 weist dabei einen umlaufenden Rand 111 auf, sodass die Aufnahme 108 von dem umlaufenden Rand 111 des Septums 102 vollständig umgriffen wird. An dem der Aufnahme 108 gegenüberliegenden Ende ist die als Patrize 109 ausgebildete Werkzeughälfte 104 mit einem Deckel 126 versehen, welcher eine Einspritzöffnung 107 aufweist, durch welchen später ein Kunststoff in das Spritzgusswerkzeug 103 eingespritzt werden kann.

Die andere Werkzeughälfte 105, die als Matrize 110 ausgebildet ist, besteht dabei aus einer Basis 105a und darauf im Wesentlichen senkrecht zur Basis 105a angeordneten Schenkel 105b und 105c. Die Schenkel 105b und 105c sind gegenüber der Basis 5a fest angeordnet. An der Basis 105a ist nach innen, zu der anderen als Patrize 109 ausgebildeten Werkzeughälfte 104 hin gerichtet, ein Stempel 112 vorgesehen, welcher von einem umlaufenden Kanal 113 umgeben ist.

In der Figur 2b ist nunmehr die als Patrize 109 ausgebildete Werkzeughälfte 104 in die als Matrize 110 ausgebildete Werkzeughälfte 105 unter Bildung einer Kavität 106 eingeschoben, wobei der Deckel 126 der Patrize 109 diese Kavität 106 gegenüber der Umwelt abschließt. Über die Einspritzöffnung 107 ist es nun möglich einen Werkstoff in die Kavität 106 einzuspritzen. Wie zudem aus der Darstellung der Figur 2b ersichtlich ist, drückt nun der Stempel 112 der Basis 105a gegen das Septum 102, sodass dieses fest gegen die Aufnahme 108 der als Patrize 109 ausgebildeten Werkzeughälfte 104 angedrückt ist. Hierbei ist zu erkennen, dass der umlaufende Rand 113 innerhalb der Basis 105a teilweise von dem Septum 102 überdeckt ist. Hierdurch ist es möglich, dass ein Hinterspritzen des Septums 2 in diesem Bereich erfolgen kann.

In der Figur 2c ist nun dargestellt, wie sich das Primärpackmittel 1 nach dem Einspritzen des Werkstoffes über die Einspritzöffnung 107 in dem Spritzgusswerkzeug 103 ausbildet. Deutlich zu erkennen ist hierbei, dass durch das Fehlen von Hinterschneidungen wie bei der Vorrichtung gemäß den Figuren 1a bis 1f die beiden Werkzeughälften 104 und 105 nunmehr einfach gegeneinander zu verfahren sind, um das Primärpackmittel 101 aus dem Spritzgusswerkzeug 103 zu entnehmen. Deutlich zu erkennen ist auch, dass der umlaufende Rand 113 der Basis 105a auch mit Werkstoff gefüllt ist und das Septum 102 damit hinterspritzt ist. Nachdem der Werkstoff in die Kavität 106 eingespritzt wurde und sich das Primärpackmittel 101 innerhalb dieser Kavität 106 ausbildet, wird ein Nachdruck beziehungsweise der Spritzguss während einer Abkühlphase aufrechterhalten, bis der Werkstoff des Primärpackmittels 101 seiner Erstarrungstemperatur unterschritten hat, sodass sich das Septum 102 nicht mehr aus dem Primärpackmittel 101 herauslösen beziehungsweise seine Position darin nicht mehr verändern kann.

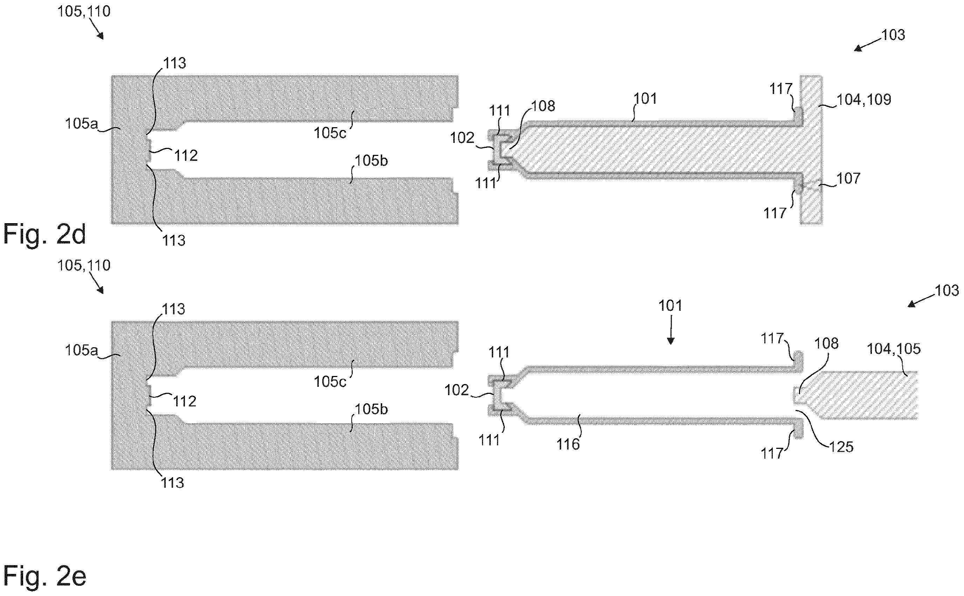

Um nun das hergestellte Primärpackmittel 101 aus dem Spritzgusswerkzeug 103 zu entnehmen, werden - wie in der Figur 1d dargestellt - nunmehr die beiden Werkzeughälften 104 und 105 nun derart gegeneinander verfahren werden, dass die als Patrize 109 ausgebildete Werkzeughälfte 104 nicht mehr in der als Matrize 110 aufgenommenen Werkzeughälfte 105 aufgenommen ist, so wie dies in Figur 2d dargestellt ist.

In der Figur 2e wird nunmehr gezeigt, wie das hergestellte erfindungsgemäße Primärpackmittel 101 nunmehr von der als Patrize 109 ausgebildeten Werkzeughälfte 104 entnommen wird und dann einer weiteren Verarbeitung zugeführt werden kann.

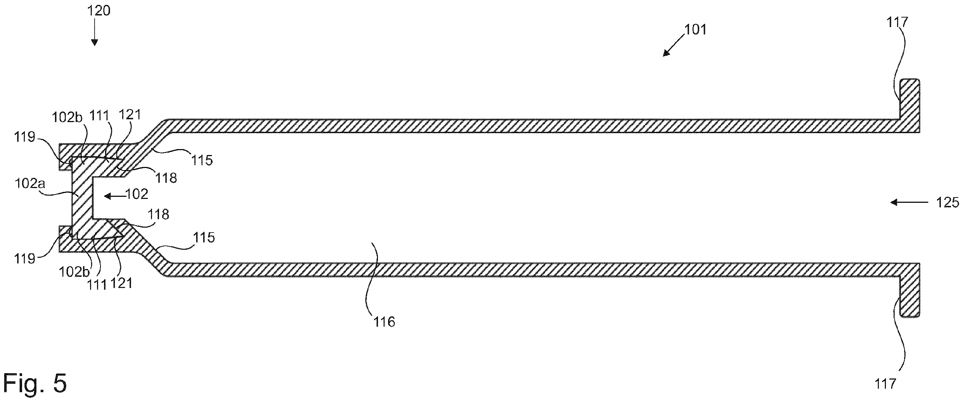

In der Figur 5 ist nunmehr ein Primärpackmittel 101 dargestellt, was nach den Verfahren und mit der Vorrichtung der Figuren 2a bis 2e hergestellt wurde. Hierbei entspricht die Innengeometrie des Primärpackmittels 101 der des Primärpackmittels 1 der Figur 4. Auch hierbei ist eine umlaufende Schräge 115 vorgesehen, welche das Primärpackmittel 101 im Entnahmebereich 120 verjüngt. Allerdings weist das Primärpackmittel 101 in diesem Entnahmebereich 102 hier keine Schulter auf, sodass ein einfacheres Herstellungsverfahren und eine einfachere Vorrichtung zum Herstellen verwendet werden kann. Das hiesige Septum 102 weist dabei wieder eine Basis 102a auf, auf welcher ein umlaufender Wandbereich 102b angeordnet ist, der einen umlaufenden Rand 111 bildet. Auch dieses Septum 102 weist dabei auf seiner Basis 102a wiederum Abstandshalter 119 auf, die bei der Herstellung des Primärpackmittels 101 dazu dienen, dass die Septi in einfacher Weise vereinzelt werden können. Ebenfalls weist dieses Septum 102 auch eine Schräge 118 auf, welche allerdings hierbei vom Innenbereich bis zum Außenbereich des umlaufenden Randes 111 geführt ist. Diese Schräge 118 dient nicht nur dazu, dass das Septum 102 bei der Herstellung des Primärpackmittels 101 in einfacher Weise auf die Aufnahme 108 aufgesteckt werden kann. Vielmehr ist durch eine derartige Schräge 118 auch erreicht, dass Wanddicken im Hals beziehungsweise im Entnahmebereich 120, im Aufnahmebereich 116 des Primärpackmittels 101 vermieden werden, sodass sich das Flowverhalten des Pharmazeutikums nicht negativ beeinflusst. Insofern ist auch hierbei gewährleistet, dass die Innenkontur beziehungsweise die Innengeometrie des Primärpackmittels 101 der der herkömmlichen Glaskartuschen entspricht.

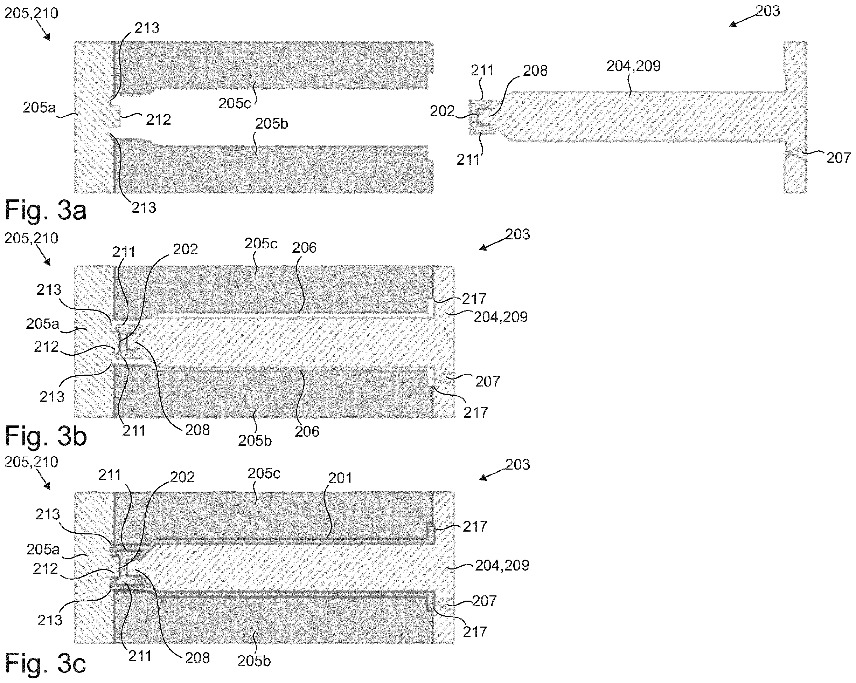

In den Figuren 3a bis 3f ist ein drittes Ausführungsbeispiel eines erfindungsgemäßen Verfahrens zur Herstellung eines erfindungsgemäßen Primärpackmittels 201 in einem dritten Ausführungsbeispiel einer erfindungsgemäßen Vorrichtung in verschiedenen Verfahrensschritten dargestellt.

Die Figur 3a zeigt dabei zwei Werkzeughälften 204, 205 eines Spritzgusswerkzeuges 203, wobei die eine Werkzeughälfte 204 als Patrize 209 und die andere Werkzeughälfte 205 als Matrize 210 ausgebildet ist. Die als Patrize 209 ausgebildete Werkzeughälfte 204 ist dabei an ihrem der anderen Werkzeughälfte 205 zugewandten Ende verjüngend beziehungsweise abgeschrägt ausgebildet und weist dort eine Aufnahme 208 für ein Septum 202 auf. In der Darstellung gemäß der Figur 3a ist bereits ein Septum 202 auf diese Aufnahme 208 aufgesetzt. Das dortige Septum 202 weist dabei einen umlaufenden Rand 211 auf, sodass die Aufnahme 208 von dem umlaufenden Rand 211 des Septums 202 vollständig umgriffen wird. An dem der Aufnahme 208 gegenüberliegenden Ende ist die als Patrize 209 ausgebildete Werkzeughälfte mit einem Deckel 226 versehen, welcher eine Einspritzöffnung 207 aufweist, durch welchen später ein Kunststoff in das Spritzgusswerkzeug 203 eingespritzt werden kann.

Die andere Werkzeughälfte 205, die als Matrize 210 ausgebildet ist, besteht dabei aus einer Basis 205a und darauf im Wesentlichen senkrecht zur Basis 205a angeordneten Schenkel 205b und 205c. Die Schenkel 5b und 5c sind gegenüber der Basis 5a radial nach außen verführbar. An der Basis 205a ist nach innen, zu der anderen als Patrize 209 ausgebildeten Werkzeughälfte 204 hin gerichtet, ein Stempel 212 vorgesehen, welcher von einem umlaufenden Kanal 213 umgeben ist. Die Schenkel 205a und 205b weisen an ihrem Außenumfang ein Gewinde 224 auf, welches auf marktübliche Pen-Injektionsnadeln abgestimmt ist, sodass die direkte Montage von derartigen Kanülen/Injektionsnadeln entsprechend den üblichen Glaskartuschen möglich ist.

In der Figur 3b ist nunmehr die als Patrize 209 ausgebildete Werkzeughälfte 204 in die als Matrize 210 ausgebildete Werkzeughälfte 205 unter Bildung einer Kavität 206 eingeschoben, wobei der Deckel 226 der Patrize 209 diese Kavität 206 gegenüber der Umwelt abschließt. Über die Einspritzöffnung 207 ist es nun möglich einen Werkstoff in die Kavität 206 einzuspritzen. Wie zudem aus der Darstellung der Figur 3b ersichtlich ist, drückt nun der Stempel 212 der Basis 205a gegen das Septum 202, sodass dieses fest gegen die Aufnahme 208 der als Patrize 209 ausgebildeten Werkzeughälfte 204 angedrückt ist. Hierbei ist zu erkennen, dass der umlaufende Rand 213 innerhalb der Basis 205a teilweise von dem Septum 202 überdeckt ist. Hierdurch ist es möglich, dass ein Hinterspritzen des Septums 202 in diesem Bereich erfolgen kann.

In der Figur 3c ist nun dargestellt, wie sich das Primärpackmittel 201 nach dem Einspritzen des Werkstoffes über die Einspritzöffnung 207 in dem Spritzgusswerkzeug 2033 ausbildet. Deutlich zu erkennen ist hierbei, dass das Gewinde 224 die beiden Werkzeughälften 204 und 205 nicht mehr einfach gegeneinander zu verfahren sind, um das Primärpackmittel 201 aus dem Spritzgusswerkzeug 203 zu entnehmen. Deutlich zu erkennen ist auch, dass der umlaufende Rand 213 der Basis 205a auch mit Werkstoff gefüllt ist und das Septum 202 damit hinterspritzt ist. Nachdem der Werkstoff in die Kavität 206 eingespritzt wurde und sich das Primärpackmittel 201 innerhalb dieser Kavität 206 ausbildet, wird ein Nachdruck beziehungsweise der Spritzguss während einer Abkühlphase aufrechterhalten, bis der Werkstoff des Primärpackmittels 201 seiner Erstarrungstemperatur unterschritten hat, sodass sich das Septum 202 nicht mehr aus dem Primärpackmittel 201 herauslösen beziehungsweise seine Position darin nicht mehr verändern kann.

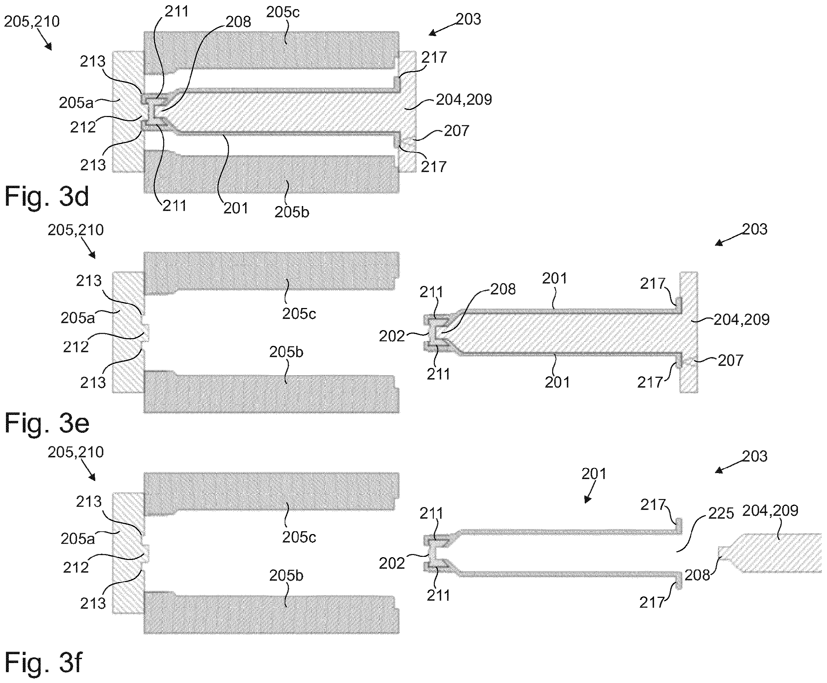

Um nun das hergestellte Primärpackmittel 201 aus dem Spritzgusswerkzeug 203 zu entnehmen, werden - wie in der Figur 3d dargestellt - nunmehr die beiden Schenkel 205b und 205c der als Matrize 210 ausgebildeten Werkzeughälfte 205 gegenüber der Basis 205a radial nach außen verfahren. Hierdurch wird das Gewinde 224 des Primärpackmittels 201 freigegeben, sodass die beiden Werkzeughälften 204 und 205 nun derart gegeneinander verfahren werden, dass die als Patrize 209 ausgebildete Werkzeughälfte 204 nicht mehr in der als Matrize 210 aufgenommenen Werkzeughälfte 205 aufgenommen ist, so wie dies in Figur 3e dargestellt ist.

In der Figur 3f wird nunmehr gezeigt, wie das hergestellte erfindungsgemäße Primärpackmittel 201 nunmehr von der als Patrize 209 ausgebildeten Werkzeughälfte 204 entnommen wird und dann einer weiteren Verarbeitung zugeführt werden kann.

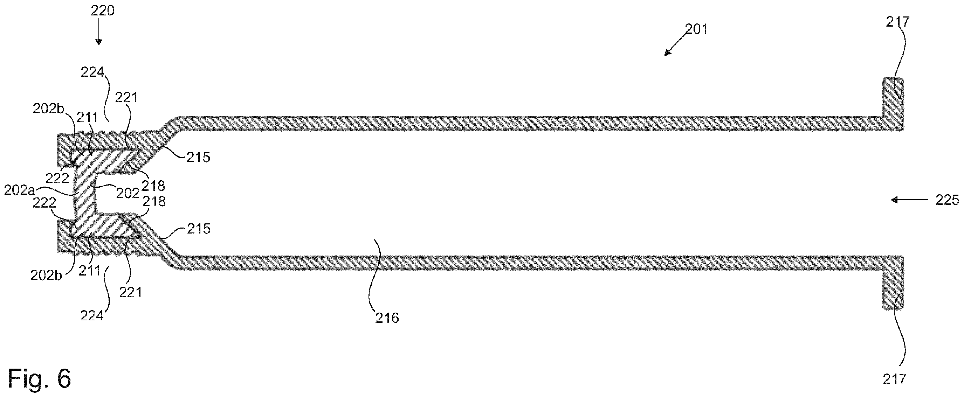

In der Figur 6 ist nunmehr ein Primärpackmittel 201 gezeigt, welches nach dem Verfahren und mit der Vorrichtung gemäß den Figuren 3a bis 3f hergestellt wurde. Dieses Primärpackmittel 201 weist in seinem Entnahmebereich 220 ein Gewinde 224 auf, welches auf marktübliche Pen-Injektionsnadeln abgestimmt ist, sodass die direkte Montage von derartigen Kanülen/Injektionsnadeln entsprechend den üblichen Glaskartuschen möglich ist. Auch bei diesem Ausführungsbeispiel eines Primärpackmittels 201 entspricht die Innenkontur wieder der Innenkontur der üblichen Glaskartuschen, sodass auch hier ein identisches Flowverhalten vorliegt. Das Septum 202 besteht auch hierbei wieder aus einer Basis 202a und einem umlaufenden Wandbereich 202b, welcher als umlaufender Rand 211 ausgebildet und auch an seinem freien Ende wieder mittels Schrägen 218 abgeschrägt ist. Auch diese Schrägen 218 dienen zum einen wieder der einfacheren Montage des Septums 202 auf der Aufnahme 208 des Spritzgusswerkzeuges 203. Zum anderen werden aber auch hierbei innerhalb des Aufnahmeraums 216 ebenfalls wieder Wanddicken vermieden, welche das Flowverhalten des Pharmazeutikums beziehungsweise der Flüssigkeit, die in dem Aufnahmeraum 216 aufgenommen ist, negativ beeinflussen könnten.

Das Septum 202 weist dabei an seiner Basis 202a einen umlaufenden Vorsprung 222 auf, den der Werkstoff während der Herstellung des Primärpackmittels 201 hinterspritzt. Durch diese Hinterspritzung wird ein besserer Halt des Septums 202 in dem Primärpackmittel 201 erreicht. Zum anderen wird dadurch auch eine mögliche Vorspannung des Septums 202 besser aufrechterhalten.

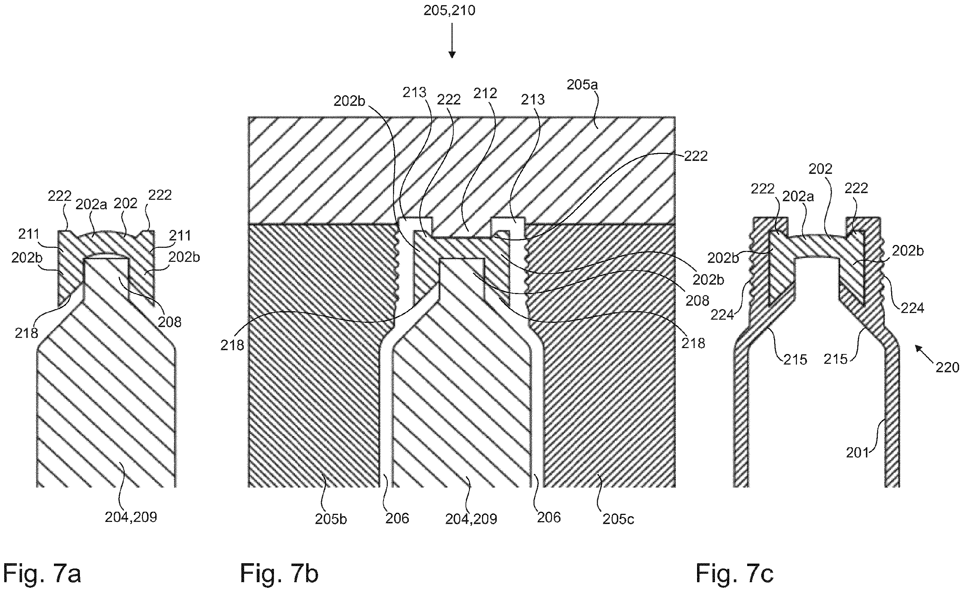

Zur Verdeutlichung ist dies nochmals in den Figuren 7a bis 7c dargestellt.

Wie in der Figur 7a deutlich zu erkennen ist, ist die Basis 202a des Septums 202 gewölbt und steht damit unter einer Vorspannung. In dieser Darstellung ist das Septum 202 bereits auf die Aufnahme 208 der als Patrize 209 ausgebildeten Werkzeughälfte 204 aufgesetzt. Der umlaufende Schenkel 202b des Septums 202 umgreift dabei mit seinem umlaufenden Rand 211 die Aufnahme 208. Das Septum 202 ist in seinem umlaufenden Rand 211 wieder mit einer Schräge 218 versehen, die der einfacheren Montage des Septums 202 auf der Aufnahme 208 dient und zudem auch Wanddicken innerhalb des Aufnahmeraums 216 des späteren Primärpackmittels 201 unterbindet.

In der Darstellung der Figur 7b ist die Werkzeughälfte 204, welche als Patrize 209 ausgebildet ist, nunmehr in die als Matrize 210 ausgebildete andere Werkzeughälfte 205 eingeführt. Der Stempel 212 der Werkzeughälfte 205 drückt dabei das Septum 202 an seiner Basis 202a gegen die Aufnahme 208, sodass die Wölbung, welche in der Figur 7a deutlich zu erkennen ist, hier nicht mehr vorliegt. Ferner sind hier auch der umlaufende Vorsprung 222 des Septums 202 sowie der den Stempel 212 umlaufende Kanal 213 zu erkennen.

In der Figur 7c ist nunmehr das fertige Primärpackmittel 201 mit seinem Entnahmebereich 220 nochmals im Detail dargestellt.

Wie hierbei deutlich zu erkennen ist, ist die Basis 202a des Septums 202 nun wieder ein wenig gewölbt, sodass sie eine gewisse Vorspannung aufrecht erhält, die das Septum immer wieder sicher steril verschließt. Weiterhin ist in dieser Darstellung auch zu erkennen, dass der umlaufende Vorsprung 222 des Septums 202 nunmehr mit dem Werkstoff umspritzt ist und somit einen sicheren Sitz des Septums innerhalb des Primärpackmittels 201 gewährleistet ist.

### Bezugszeichenliste

- 1: Primärpackmittel
- 2: Septum
- 2a: Basis
- 2b: Wandbereich
- 3: Spritzgusswerkzeug
- 4: Werkzeughälfte
- 5: Werkzeughälfte
- 5a: Basis
- 5b: Schenkel
- 5c: Schenkel
- 6: Kavität
- 7: Einspritzöffnung
- 8: Aufnahme
- 9: Patrize
- 10: Matrize
- 11: Rand
- 12: Stempel
- 13: Kanal
- 14: Schulter
- 15: Schräge
- 16: Aufnahmeraum
- 17: Flansch
- 18: Schräge
- 19: Abstandshalter
- 20: Entnahmebereich
- 21: Schräge
- 23: Hinterschnitt
- 25: Öffnung
- 26: Deckel

- 101: Primärpackmittel
- 102: Septum
- 102a: Basis
- 102b: Wandbereich
- 103: Spritzgusswerkzeug
- 104: Werkzeughälfte
- 105: Werkzeughälfte
- 105a: Basis
- 105b: Schenkel
- 105c: Schenkel
- 106: Kavität
- 107: Einspritzöffnung
- 108: Aufnahme
- 109: Patrize
- 110: Matrize
- 111: Rand
- 112: Stempel
- 113: Kanal
- 114: Schulter
- 115: Schräge
- 116: Aufnahmeraum
- 117: Flansch
- 118: Schräge
- 119: Abstandshalter
- 120: Entnahmebereich
- 121: Schräge
- 125: Öffnung
- 126: Deckel

- 201: Primärpackmittel
- 202: Septum
- 202a: Basis
- 202b: Wandbereich
- 203: Spritzgusswerkzeug
- 204: Werkzeughälfte
- 205: Werkzeughälfte
- 205a: Basis
- 205b: Schenkel
- 205c: Schenkel
- 206: Kavität
- 207: Einspritzöffnung
- 208: Aufnahme
- 209: Patrize
- 210: Matrize
- 211: Rand
- 212: Stempel
- 213: Kanal
- 214: Schulter
- 215: Schräge
- 216: Aufnahmeraum
- 217: Flansch
- 218: Schräge
- 219: Abstandshalter
- 220: Entnahmebereich
- 221: Schräge
- 222: Vorsprung
- 224: Gewinde
- 225: Öffnung
- 226: Deckel

## Patentansprüche

1. Verfahren zum Herstellen eines Primärpackmittels (1, 101, 201) mit integriertem Septum (2, 102, 202), **gekennzeichnet durch** folgende Verfahrensschritte:
a) Bereitstellen eines Septums (2, 102, 202),
b) Bereitstellen eines Spritzgusswerkzeuges (3, 103, 203) mit zwei relativ gegeneinander verfahrbaren Werkzeughälften (4, 5; 104, 105; 204, 205), wobei eine Werkzeughälfte (4, 5; 104, 105; 204, 205) eine Aufnahme (8, 108, 208) für das Septum (2, 102, 202) und die andere Werkzeughälfte (4, 5; 104, 105; 204, 205) einen Stempel (12, 112, 212) aufweist,
c) Positionieren des Septums (2, 102, 202) in dem Spritzgusswerkzeug (3, 103, 203),
d) Verfahren der beiden Werkzeughälften (4, 5; 104, 105; 204, 205) des Spritzgusswerkzeuges (3, 103, 203) derart, dass eine der Geometrie des herzustellenden Primärpackmittels (1, 101, 201) entsprechende Kavität (6, 106, 206) entsteht, wobei der Stempel (12, 112, 212) und die Aufnahme (8, 108, 208) während des Einspritzens des Werkstoffs gegeneinandergedrückt werden, so dass sich das zumindest abschnittsweise zwischen dem Stempel (12, 112, 212) und der Aufnahme (8, 108, 208) befindliche Septum (2, 102, 202) in einem eingepressten vorgespannten Zustand befindet,
e) Einspritzen eines Werkstoffes in die Kavität (6, 106, 206) des Spritzgusswerkzeugs (3, 103, 203) über eine Einspritzöffnung (7, 107, 207) in einer der Werkzeughälften (4, 5; 104, 105; 204, 205) des Spritzgusswerkzeugs (3, 103, 203), wobei das Septum (2, 102, 202) zwischen den beiden Werkzeughälften (4, 5; 104, 105; 204, 205) des Spritzgusswerkzeugs (3, 103, 203) von diesen auf Vorspannung gehalten und ein Rand (11, 111, 211) des Septums (2, 102, 202) von dem Werkstoff umspritzt wird, wobei ein Bereich des Septums (2, 102, 202), der von beiden Werkzeughälften (4, 5; 104, 105; 204, 205) kontaktiert wird, frei von Werkstoff bleibt, wobei das Septum (2, 102, 202) auch von seiner Frontseite her mit Werkstoff umspritzt wird,
f) Abkühlen des eingespritzten Werkstoffs unter Aufrechterhaltung eines Nachdrucks, wodurch sich das herzustellende Primärpackmittel (1, 101, 201) mit integriertem Septum (2, 102, 202) ausbildet,
g) Verfahren der beiden Werkzeughälften (4, 5; 104, 105; 204, 205) des Spritzgusswerkzeuges (3, 103, 203) derart, dass das hergestellte Primärpackmittel (1, 101, 201) mit integriertem Septum (2, 102, 202) aus dem Spritzgusswerkzeug (3, 103, 203) entnommen werden kann und
h) Entnahme des hergestellten Primärpackmittels (1, 101, 201) mit integriertem Septum (2, 102, 202) aus dem Spritzgusswerkzeug (3, 103, 203).

2. Verfahren nach Anspruch 1,
**dadurch gekennzeichnet, dass**
als Werkstoff ein Kunststoff wie beispielsweise ein Cycloolefin-Polymer, ein Cycloolefin-Copolymer oder dergleichen verwendet wird.

3. Verfahren nach Anspruch 1 oder 2,
**dadurch gekennzeichnet, dass**
als Septum (2, 102, 202) aus einem Elastomer verwendet wird.

4. Verfahren nach einem der vorhergehenden Ansprüche,
**dadurch gekennzeichnet, dass**
das Septum (2, 102, 202) vor dem Einspritzen des Werkstoffs in einer Aufnahme (8, 108, 208) einer als Patrize (9, 109, 209) ausgebildeten Werkzeughälfte (4, 104, 204) positioniert wird.

5. Verfahren nach einem der Ansprüche 1 bis 3,
**dadurch gekennzeichnet, dass**
das Septum (2, 102, 202) vor dem Einspritzen des Werkstoffs in einer Aufnahme einer als Matrize (10, 110, 210) ausgebildeten Werkzeughälfte (5, 105, 205) positioniert wird.

6. Vorrichtung zum Herstellen eines Primärpackmittels (1, 101, 201) mit integriertem Septum (2, 102, 202) nach einem Verfahren der Ansprüche 1 bis 5,
**dadurch gekennzeichnet, dass**
ein Spritzgusswerkzeug (3, 103, 203) mit zwei relativ gegeneinander verfahrbaren Werkzeughälften (4, 5; 104, 105; 204, 205) vorgesehen ist,
wobei eine der Werkzeughälften (4, 104, 204) als Patrize (9, 109, 209) und die andere Werkzeughälfte (5, 105, 205) als Matrize (10, 110, 210) ausgebildet ist und an einer der Werkzeughälften (4, 5; 104, 105; 204, 205) eine Aufnahme (8, 108, 208) für das Septum (2, 102, 202) und an der anderen Werkzeughälfte (4, 5; 104, 105; 204, 205) ein Stempel (12, 112, 212) zum Andrücken des Septums (2, 102, 202) an die Aufnahme (8, 108, 208) während des Einspritzens des Werkstoffs über eine Einspritzöffnung (7, 107, 207) in eine Kavität (6, 106, 206) vorgesehen ist, so dass sich das zumindest abschnittsweise zwischen dem Stempel (12, 112, 212) und der Aufnahme (8, 108, 208) befindliche Septum (2, 102, 202) in einem eingepressten vorgespannten Zustand befindet, wobei in der als Matrize (10, 110, 210) ausgebildeten Werkzeughälfte (5, 105, 205) benachbart zum Stempel (12, 112, 212) ein umlaufender Kanal (13, 113, 213) vorgesehen ist, so dass ein Rand (11, 111, 211) des Septums (2, 102, 202) von dem Werkstoff umspritzt werden kann, wobei ein Bereich des Septums (2, 102, 202), der von beiden Werkzeughälften (4, 5; 104, 105; 204, 205) kontaktiert wird, frei von Werkstoff bleibt, wobei ein Mittel zum Positionieren des Septums (2, 102, 202) in dem Spritzgusswerkzeug (3, 103, 203) vorgesehen ist, wobei ein Mittel zum Abkühlen des eingespritzten Werkstoffs unter Aufrechterhaltung eines Nachdrucks vorgesehen ist, wobei ein Mittel zur Entnahme des hergestellten Primärpackmittels (1, 101, 201) mit integriertem Septum (2, 102, 202) aus dem Spritzgusswerkzeug (3, 103, 203) vorgesehen ist.

7. Vorrichtung nach Anspruch 6,
**dadurch gekennzeichnet, dass**
die als Matrize (10, 110, 210) ausgebildeten Werkzeughälfte (5, 105, 205) eine Basis (5a, 105a, 205a) und zwei darauf im Wesentlichen senkrecht stehende Schenkel (5b, 5c; 105b, 105c; 205b, 205c) aufweist, wobei die Innenkontur der beiden Schenkeln der Außenkontur des herzustellenden Primärpackmittels (1, 101, 201) entspricht und die Schenkel (5b, 5c; 105b, 105c; 205b, 205c) nach außen weg verfahrbar sind.

8. Vorrichtung nach Anspruch 6 oder 7,
**dadurch gekennzeichnet, dass**
die im Wesentlichen senkrecht auf der Basis (5a, 105a, 205a) stehenden Schenkel (5b, 5c; 105b, 105c; 205b, 205c) radial nach außen in Bezug auf die Basis (5a, 105a, 205a) verfahrbar gehalten sind.

9. Vorrichtung nach einem der Ansprüche 6 bis 8,
**dadurch gekennzeichnet, dass**
das die Außenkontur der als Patrize (9, 109, 209) ausgebildeten Werkzeughälfte (4, 104, 204) der Innenkontur des herzustellenden Primärpackmittels (1, 101, 201) entspricht.

10. Primärpackmittel (1, 101, 201) mit integriertem Septum (2, 102, 202) hergestellt nach einem Verfahren der Ansprüche 1 bis 5 und/oder mit einer Vorrichtung nach einem der Ansprüche 6 bis 9,
**dadurch gekennzeichnet, dass**
es aus einem Kunststoff besteht, in welchem das Septum (2, 102, 202) in einem Entnahmebereich (20, 120, 220) aufgenommen ist, wobei das Septum (2, 102, 202) einen Aufnahmeraum (16, 116, 216) für ein Pharmazeutikum des Primärpackmittels (1, 101, 201) von dessen Außenraum trennt, wobei ein Rand (11, 111, 211) des Septums (2, 102, 202) von dem Kunststoff umgeben ist, wobei an einer Frontseite des Septums (2, 102, 202) in einem ersten Bereich der Kunststoff aufgespritzt ist und in einem zweiten Bereich kein Kunststoff aufgespritzt ist.

11. Primärpackmittel (1) nach Anspruch 10,
**dadurch gekennzeichnet, dass**
der Entnahmebereich (20) eine zum Aufnahmeraum (16) hinweisende Schulter (14) aufweist.

12. Primärpackmittel (1, 101, 201) nach einem der Ansprüche 10 oder 11,
**dadurch gekennzeichnet, dass**
es an dem zum Entnahmebereich (20, 120, 220) hinweisenden Ende des Aufnahmeraums (16, 116, 216) für ein Pharmazeutikum mit einer umlaufenden Schräge (15, 115, 116) versehen ist.

13. Primärpackmittel (1, 101, 201) nach einem der Ansprüche 10 bis 12,
**dadurch gekennzeichnet, dass**
das Septum (2, 102, 202) eine Basis (2a, 102a, 202a) sowie einen darauf im Wesentlichen senkrecht stehenden umlaufenden Wandbereich (2b, 102b, 202b) aufweist.

14. Primärpackmittel (1, 101, 201) nach Anspruch 13,
**dadurch gekennzeichnet, dass**
der umlaufendene Wandbereich (2b, 102b, 202b) des Septums (2, 102, 202) an seinem freien Ende eine nach Innen weisende Schräge (18, 118, 218) aufweist.

15. Primärpackmittel (101, 201) nach Anspruch 13 oder 14,
**dadurch gekennzeichnet, dass**
der umlaufendene Wandbereich (102b, 202b) des Septums (102, 202) an seinem freien Ende eine nach Außen weisende Schräge (121, 221) aufweist.

16. Primärpackmittel (1, 101) nach einem der Ansprüche 10 bis 15,
**dadurch gekennzeichnet, dass**
das Septum (2, 102) an seiner Basis (2a, 102a) mit Abstandshaltern (19, 119) versehen ist.

17. Primärpackmittel (201) nach einem der Ansprüche 10 bis 16,
**dadurch gekennzeichnet, dass**
das Septum (202) an seiner Basis (202a) mit einem umlaufenden, vorzugsweise abgeschrägten Vorsprung (222) versehen ist.

18. Primärpackmittel (1, 101, 201) nach einem der Ansprüche 10 bis 17,
**dadurch gekennzeichnet, dass**
an dem Septum (2, 201, 202) gegenüberliegenden Ende eine Öffnung (25, 125, 225) vorgesehen ist.

19. Primärpackmittel (1, 101, 201) nach einem der Ansprüche 10 bis 18,
**dadurch gekennzeichnet, dass**
an der dem Septum (2, 201, 202) gegenüberliegend angeordnete Öffnung (25, 125, 225) ein Flansch (17, 117, 217) vorgesehen ist.

## Claims

1. Method for producing primary packaging (1, 101, 201) having an integrated septum (2, 102, 202), **characterised by** the following method steps:
a) providing a septum (2, 102, 202),
b) providing an injection-molding die (3, 103, 203) having two die halves (4, 5; 104, 105; 204, 205) that can be moved relative to one another, wherein one die half (4, 5; 104, 105; 204, 205) comprises a holder (8, 108, 208) for the septum (2, 102, 202), and the other die half (4, 5; 104, 105; 204, 205) comprises a stamp (12, 112, 212),
c) positioning the septum (2, 102, 202) in the injection-molding die (3, 103, 203),
d) moving the two die halves (4, 5; 104, 105; 204, 205) of the injection-molding die (3, 103, 203) such that a cavity (6, 106, 206) is formed that corresponds to the shape of the primary packaging (1, 101, 201) to be produced, wherein the stamp (12, 112, 212) and the holder (8, 108, 208) are pressed against one another when the material is injected, such that the septum (2, 102, 202), which is located at least in section between the stamp (12, 112, 212) and the holder (8, 108, 208), is in a pressed-in, pretensioned state,
e) injecting a material into the cavity (6, 106, 206) in the injection-molding die (3, 103, 203) via an injection opening (7, 107, 207) in one of the die halves (4, 5; 104, 105; 204, 205) of the injection-molding die (3, 103, 203), the two die halves (4, 5; 104, 105; 204, 205) of the injection-molding die (3, 103, 203) pretensioningly holding the septum (2, 102, 202) therebetween, and a rim (11, 111, 211) of the septum (2, 102, 202) being overmolded by the material, a region of the septum (2, 102, 202) in contact with the two die halves (4, 5; 104, 105; 204, 205) remaining free of material, wherein the septum (2, 102, 202) is also overmolded with material from the front side thereof,
f) cooling the injected material while maintaining a holding pressure, as a result of which the primary packaging (1, 101, 201) is formed having an integrated septum (2, 102, 202),
g) moving the two die halves (4, 5; 104, 105; 204, 205) of the injection-molding die (3, 103, 203) such that the produced primary packaging (1, 101, 201) having the integrated septum (2, 102, 202) can be removed from the injection-molding die (3, 103, 203), and
h) removing the produced primary packaging (1, 101, 201) having the integrated septum (2, 102, 202) from the injection-molding die (3, 103, 203).

2. Method according to claim 1,
**characterised in that**
a plastics material, such as a cycloolefin polymer, a cycloolefin copolymer or the like, is used as the material.

3. Method according to either claim 1 or claim 2,
**characterised in that**
as a septum (2, 102, 202) made of an elastomer is used.

4. Method according to any of the preceding claims,
**characterised in that**,
before the material is injected, the septum (2, 102, 202) is positioned in a holder (8, 108, 208) of a die half (4, 104, 204) designed as a male mold (9, 109, 209).

5. Method according to any of claims 1 to 3,
**characterised in that**,
before the material is injected, the septum (2, 102, 202) is positioned in a holder of a die half (5, 105, 205) designed as a female mold (10, 110, 210).

6. Apparatus for producing primary packaging (1, 101, 201) having an integrated septum (2, 102, 202) according to a method from claims 1 to 5,
**characterised in that**
an injection-molding die (3, 103, 203) is provided with two die halves (4, 5; 104, 105; 204, 205) that can be moved relative to one another,
one of the die halves (4, 104, 204) being designed as a male mold (9, 109, 209) and the other die half (5, 105, 205) being designed as a female mold (10, 110, 210), and a holder (8, 108, 208) for the septum (2, 102, 202) being provided on one of the die halves (4, 5; 104, 105; 204, 205) and a stamp (12, 112, 212) being provided on the other die half (4, 5; 104, 105; 204, 205) for pressing the septum (2, 102, 202) against the holder (8, 108, 208) when the material is injected via an injection opening (7, 107, 207) into a cavity (6, 106, 206) such that the septum (2, 102, 202), which is located at least in section between the stamp (12, 112, 212) and the holder (8, 108, 208), is in a pressed-in, pretensioned state, wherein a peripheral channel (13, 113, 213) is provided in the die half (5, 105, 205) designed as a female mold (10, 110, 210), next to the stamp (12, 112, 212), such that a rim (11, 111, 211) of the septum (2, 102, 202) is overmolded when the material is injected, wherein a region of the septum (2, 102, 202) in contact with the two die halves (4, 5; 104, 105; 204, 205) remains free of material, wherein a means for positioning the septum (2, 102, 202) in the injection-molding die (3, 103, 203) is provided, wherein a means for cooling the injected material while maintaining a holding pressure is provided, wherein a means for removing the produced primary packaging (1, 101, 201) having the integrated septum (2, 102, 202) from the injection-molding die (3, 103, 203) is provided.

7. Apparatus according to claim 6,
**characterised in that**
the die half (5, 105, 205) designed as a female mold (10, 110, 210) comprises a base (5a, 105a, 205a) and two legs (5b, 5c; 105b, 105c; 205b, 205c) that are positioned substantially perpendicularly thereon, the inner contour of the two legs corresponding to the outer contour of the primary packaging (1, 101, 201) to be produced, and it being possible to move the legs (5b, 5c; 105b, 105c; 205b, 205c) outwardly away.

8. Apparatus according to claim 6 or claim 7,
**characterised in that**
the legs (5b, 5c; 105b, 105c; 205b, 205c) that are positioned substantially perpendicularly on the base (5a, 105a, 205a) are held so as to be movable radially outwardly relative to the base (5a, 105a, 205a).

9. Apparatus according to any of claims 6 to 8,
**characterised in that**,
the outer contour of the die half (4, 104, 204) designed as a male mold (9, 109, 209) corresponds to the inner contour of the primary packaging (1, 101, 201) to be produced.

10. Primary packaging (1, 101, 201) having an integrated septum (2, 102, 202) produced according to a method from claims 1 to 5 and/or by means of an apparatus according to any of claims 6 to 9,
**characterised in that**
said primary packaging consists of a plastics material, in which the septum (2, 102, 202) is accommodated in a removal region (20, 120, 220), the septum (2, 102, 202) separating a pharmaceutical receiving chamber (16, 116, 216) of the primary packaging (1, 101, 201) from the outside thereof.

11. Primary packaging (1) according to claim 10,
**characterised in that**
the removal region (20) comprises a shoulder (14) that faces the receiving chamber (16).

12. Primary packaging (1, 101, 201) according to either claim 10 or claim 11,
**characterised in that**
it is provided with a peripheral slope (15, 115, 116) at the end of the pharmaceutical receiving chamber (16, 116, 216) facing the removal region (20, 120, 220).

13. Primary packaging (1, 101, 201) according to any of claims 10 to 12,
**characterised in that**
the septum (2, 102, 202) comprises a base (2a, 102a, 202a) and a peripheral wall region (2b, 102b, 202b) that is positioned substantially perpendicularly thereon.

14. Primary packaging (1, 101, 201) according to claim 13,
**characterised in that**
the peripheral wall region (2b, 102b, 202b) of the septum (2, 102, 202) comprises an inward-facing slope (18, 118, 218) at the free end of said wall region.

15. Primary packaging (101, 201) according to either claim 13 or claim 14,
**characterised in that**
the peripheral wall region (102b, 202b) of the septum (102, 202) comprises an outward-facing slope (121, 221) at the free end of said wall region.

16. Primary packaging (1, 101) according to any of claims 10 to 15,
**characterised in that**
the septum (2, 102) is provided with spacers (19, 119) on the base thereof (2a, 102a).

17. Primary packaging (201) according to any of claims 10 to 16,
**characterised in that**
the septum (202) is provided with a peripheral, preferably chamfered projection (222) on the base (202a) thereof.

18. Primary packaging (1, 101, 201) according to any of claims 10 to 17,
**characterised in that**
an opening (25, 125, 225) is provided at the end opposite the septum (2, 201, 202).

19. Primary packaging (1, 101, 201) according to any of claims 10 to 18,
**characterised in that**
a flange (17, 117, 217) is provided on the opening (25, 125, 225) arranged opposite the septum (2, 201, 202).

## Revendications

1. Procédé de fabrication d'un moyen d'emballage primaire (1, 101, 201) avec septum intégré (2, 102, 202), **caractérisé par** les étapes de procédé suivantes :
a) se procurer un septum (2, 102, 202) ;
b) se procurer un outil de moulage par injection (3, 103, 203) avec deux moitiés d'outil (4, 5 ; 104, 105 ; 204, 205) déplaçables l'une par rapport à l'autre, une moitié d'outil (4, 5 ; 104 ; 105 ; 204, 205) présentant un logement (8, 108, 208) pour le septum (2, 102, 202), et l'autre moitié d'outil (4, 5 ; 104 ; 105, 204, 205), un poinçon (12, 112, 212) ;
c) positionner le septum (2, 102, 202) dans l'outil de moulage par injection (3, 103, 203) ;
d) déplacer les deux moitiés d'outil (4, 5 ; 104, 105 ; 204, 205) de l'outil de moulage par injection (3, 103, 203) de telle sorte qu'une cavité (6, 106, 206) correspondant à la géométrie du moyen d'emballage primaire (1, 101, 201) à fabriquer soit créée, le poinçon (12, 112, 212) et le logement (8, 108, 208) étant pressés l'un contre l'autre pendant l'injection de telle sorte que le septum (2, 102, 202) se trouvant au moins par endroits entre le poinçon (12, 112, 212) et le logement (8, 108, 208) se trouve dans un état précontraint comprimé ;
e) injecter une matière dans la cavité (6, 106, 206) de l'outil de moulage par injection (3, 103, 203) par une ouverture d'injection (7, 107, 207) dans l'une des moitiés d'outil (4, 5 ; 104, 105 ; 204, 205) de l'outil de moulage par injection (3, 103, 203), le septum (2, 102, 202) entre les deux moitiés d'outil (4, 5 ; 104, 105 ; 204, 205) de l'outil de moulage par injection (3, 103, 203) étant maintenu sous précontrainte par celles-ci et un bord (11, 111, 211) du septum (2, 102, 202) étant surmoulé par la matière, une région du septum (2, 102, 202) qui est en contact avec les deux moitiés d'outil (4, 5 ; 104, 105 ; 204, 205) restant exempte de matière, le septum (2, 102, 202) étant également surmoulé avec la matière par son côté frontal ;
f) refroidir la matière injectée tout en maintenant une pression de maintien, ce par quoi le moyen d'emballage primaire (1, 101, 201) à fabriquer se forme avec septum intégré (2, 102, 202) ;
g) déplacer les deux moitiés d'outil (4, 5 ; 104, 105 ; 204, 205) de l'outil de moulage par injection (3, 103, 203) de telle sorte que le moyen d'emballage primaire fabriqué (1, 101, 201) avec septum intégré (2, 102, 202) puisse être retiré de l'outil de moulage par injection (3, 103, 203) ; et
h) retirer de l'outil de moulage par injection (3, 103, 203) le moyen d'emballage primaire fabriqué (1, 101, 201) avec septum intégré (2, 102, 202).

2. Procédé selon la revendication 1,
**caractérisé par le fait que**
comme matière, est utilisée une matière plastique comme par exemple un polymère de cyclooléfine, un copolymère de cyclooléfine ou similaires.

3. Procédé selon l'une des revendications 1 ou 2,
**caractérisé par le fait que**
comme septum (2, 102, 202), est utilisé un septum en élastomère.

4. Procédé selon l'une des revendications précédentes,
**caractérisé par le fait que**
le septum (2, 102, 202), avant l'injection de la matière, est positionné dans un logement (8, 108, 208) d'une moitié d'outil (4, 104, 204) conçue comme moule mâle (9, 109, 209).

5. Procédé selon l'une des revendications 1 à 3, **caractérisé par le fait que** le septum (2, 102, 202), avant l'injection de la matière, est positionné dans un logement d'une moitié d'outil (5, 105, 205) conçue comme moule femelle (10, 110, 210).

6. Dispositif pour la fabrication d'un moyen d'emballage primaire (1, 101, 201) avec septum intégré (2, 102, 202) selon un procédé de l'une des revendications 1 à 5,
**caractérisé par le fait qu'**
un outil de moulage par injection (3, 103, 203) est pourvu de deux moitiés d'outil (4, 5 ; 104, 105 ; 204, 205) déplaçables l'une par rapport à l'autre,
l'une des moitiés d'outil (4, 104, 204) étant conçue comme moule mâle (9, 109, 209), et l'autre moitié d'outil (5, 105, 205), comme moule femelle (10, 110, 210), et un logement (8, 108, 208) pour le septum (2, 102, 202) étant prévu sur l'une des moitiés d'outil (4, 5 ; 104, 105 ; 204, 205) et un poinçon (12, 112, 212) étant prévu sur l'autre moitié d'outil (4, 5 ; 104, 105 ; 204, 205) pour presser le septum (2, 102, 202) contre le logement (8, 108, 208) pendant l'injection de la matière par une ouverture d'injection (7, 107, 207) dans une cavité (6, 106, 206), de telle sorte que le septum (2, 102, 202) se trouvant au moins par endroits entre le poinçon (12, 112, 212) et le logement (8, 108, 208) se trouve dans un état précontraint comprimé, un canal périphérique (13, 113, 213) étant prévu dans la moitié d'outil (5, 105, 205) conçue en tant que moule femelle (10, 110, 210) au voisinage du poinçon (12, 112, 212), de telle sorte qu'un bord (11, 111, 211) du septum (2, 102, 202) puisse être surmoulé par la matière, une région du septum (2, 102, 202), qui est en contact avec les deux moitiés d'outil (4, 5 ; 104, 105 ; 204, 205), restant exempte de matière, un moyen pour le positionnement du septum (2, 102, 202) dans l'outil de moulage par injection (3, 103, 203) étant prévu, un moyen pour le refroidissement de la matière injectée avec maintien d'une pression de maintien étant prévu, un moyen pour le retrait de l'outil de moulage par injection (3, 103, 203) du moyen d'emballage primaire (1, 101, 201) fabriqué avec septum intégré (2, 102, 202) étant prévu.

7. Dispositif selon la revendication 6, **caractérisé par le fait que** la moitié d'outil (5, 105, 205) conçue en tant que moule femelle (10, 110, 210) présente une base (5a, 105a, 205a) et deux branches (5b, 5c ; 105b, 105c ; 205b, 205c) se trouvant sensiblement verticalement sur celle-ci, le contour intérieur des deux branches correspondant au contour extérieur du moyen d'emballage primaire (1, 101, 201) à fabriquer et les branches (5b, 5c ; 105b, 105c ; 205b, 205c) étant déplaçables vers l'extérieur.

8. Dispositif selon l'une des revendications 6 ou 7,
**caractérisé par le fait que**
les branches (5b, 5c ; 105b, 105c ; 205b, 205c) qui se trouvent sensiblement perpendiculaires à la base (5a, 105a, 205a) sont maintenues de manière déplaçable radialement vers l'extérieur par rapport à la base (5a, 105a, 205a).

9. Dispositif selon l'une des revendications 6 à 8,
**caractérisé par le fait que**
le contour extérieur de la moitié d'outil (4, 104, 204) conçue en tant que moule mâle (9, 109, 209) correspond au contour intérieur du moyen d'emballage primaire (1, 101, 201) à fabriquer.

10. Moyen d'emballage primaire (1, 101, 201) avec un septum intégré (2, 102, 202) fabriqué selon un procédé de l'une des revendications 1 à 5 et/ou avec un dispositif selon l'une des revendications 6 à 9,
**caractérisé par le fait qu'**
il est fait d'une matière plastique dans laquelle le septum (2, 102, 202) est reçu dans une région de retrait (20, 120, 220), le septum (2, 102, 202) séparant une chambre de réception (16, 116, 216) d'un produit pharmaceutique du moyen d'emballage primaire (1, 101, 201) vis-à-vis de son espace extérieur, un bord (11, 111, 211) du septum (2, 102, 202) étant entouré par la matière plastique, où, sur un côté frontal du septum (2, 102, 202) dans une première région, la matière plastique est injectée, et, dans une seconde région, il n'est pas injecté de matière plastique.

11. Moyen d'emballage primaire (1) selon la revendication 10,
**caractérisé par le fait que**
la région de retrait (20) présente un épaulement (14) faisant face à la chambre de réception (16).

12. Moyen d'emballage primaire (1, 101, 201) selon l'une des revendications 10 ou 11,
**caractérisé par le fait qu'**
il est doté d'une pente périphérique (15, 115, 116) à l'extrémité de la chambre de réception (16, 116, 216) d'un produit pharmaceutique faisant face à la région de retrait (20, 120, 220).

13. Moyen d'emballage primaire (1, 101, 201) selon l'une des revendications 10 à 12,
**caractérisé par le fait que**
le septum (2, 102, 202) présente une base (2a, 102a, 202a) ainsi qu'une région de paroi périphérique (2b, 102b, 202b) se trouvant sensiblement perpendiculaire à celle-ci.

14. Moyen d'emballage primaire (1, 101, 201) selon la revendication 13,
**caractérisé par le fait que**
la région de paroi périphérique (2b, 102b, 202b) du septum (2, 102, 202) présente une pente (18, 118, 218) tournée vers l'intérieur à son extrémité libre.

15. Moyen d'emballage primaire (101, 201) selon l'une des revendications 13 ou 14,
**caractérisé par le fait que**
la région de paroi périphérique (102b, 202b) du septum (102, 202) présente une pente (121, 221) tournée vers l'extérieur à son extrémité libre.

16. Moyen d'emballage primaire (1, 101) selon l'une des revendications 10 à 15,
**caractérisé par le fait que**
le septum (2, 102) est doté d'espaceurs (19, 119) à sa base (2a, 102a).

17. Moyen d'emballage primaire (201) selon l'une des revendications 10 à 16,
**caractérisé par le fait que**
le septum (202) est doté à sa base (202a) d'une saillie périphérique (222), de préférence biseautée.

18. Moyen d'emballage primaire (1, 101, 201) selon l'une des revendications 10 à 17,
**caractérisé par le fait qu'**
une ouverture (25, 125, 225) est prévue à l'extrémité opposée au septum (2, 201, 202).

19. Moyen d'emballage primaire (1, 101, 201) selon l'une des revendications 10 à 18,
**caractérisé par le fait qu'**
une bride (17, 117, 217) est prévue sur l'ouverture (25, 125, 225) disposée opposée au septum (2, 201, 202).
